# EUROPEAN PATENT SPECIFICATION

(11) **EP 0 726 678 B1**
(45) Date of publication and mention of the grant of the patent: **19.04.2000**
(21) Application number: 96200165.7
(22) Date of filing: 24.01.1996
(51) Int. Cl.: H04N 7/18

(54) **Video-intercom enabling portions of the field of view to be selected, memorized and enlarged**
Videohaustelefon mit der Möglichkeit der Auswahl, Speicherung und Vergrösserung verschiedener Bildausschitte
Interphone audiovisuel avec possibilité de choisir, de stocker et d'agrandir des parties de champs de vision

(30) Priority: 09.02.1995 IT MI950230
(43) Date of publication of application: 14.08.1996
(73) Proprietor: BTICINO S.P.A., 20122 Milano (IT)
(72) Inventor: Ruffini, Stefano, 20161 Milano (IT)
(74) Representative: Appoloni, Romano

(56) References cited:
- EP-A- 0 497 428
- WO-A-93/18594
- FR-A- 2 672 761
- US-A- 5 187 574

## Description

This invention relates to a video-intercom enabling portions of the field of view of a telecamera to be selected, memorized and enlarged.

In the video-intercom sector, systems are currently available comprising, inter alia, image pickup devices (hereinafter known as telecameras) and devices for displaying the images picked up by the telecamera (hereinafter known as internal extension units).

These devices can be variously combined and supplemented to form video-intercom systems.

Known devices for this purpose provide the following facilities:
- horizontal and/or vertical mechanical scanning of the field of view of a telecamera, to explore bordering regions;
- selection and/or enlargement of portions of the field of view of a telecamera by electronically processing the video signal picked up;
- memorization of the images picked up by a telecamera followed by their display.

Such arrangements however give rise to certain problems and drawbacks.

A typical drawback is that the devices which implement the mechanical scanning of the telecamera field of view involve moving parts which necessitate the construction of telecameras dedicated to this function and which can prejudice the reliability of said devices in time. US-A-5 187 574 and EP-A-0 497 428 show video-intercoms with an automatic selection of a visitors head and subsequent image processing.

There are still no video-intercoms available which simultaneously provide image display, image memorization, arbitrary selection of portions of a telecamera field of view and their enlargement without the provision of moving mechanical members on the telecamera.

The object of the present invention is to solve the aforesaid problems and in particular to provide a video-intercom which enables portions of a telecamera field of view to be selected, the selected portions enlarged and the images picked up by the telecamera memorized.

This object is attained by a video-intercom as claimed in claim 1. It comprises at least one telecamera for image pickup, at least one internal extension unit connected to the telecamera, and at least one circuit arrangement which processes the video signal originating from said telecamera before feeding it to a screen provided on the internal extension unit, said circuit arrangement comprises means for simultaneously implementing electronic scanning of the field of view of said telecamera without the telecamera having to be moved and without the provision of moving mechanical members on the telecamera, electronic scanning meaning the selection of portions of the field of view, their memorization and their enlargement.

Advantageously, the video-intercom according to the invention selects and enlarges the image portions picked up by the telecamera as the result of manual action by the user on his own internal extension unit, whereas image memorization can be effected either manually or automatically, by programming the operation of the video-intercom.

The use of a video signal electronic scanning circuit arrangement for image selection, enlargement and memorization enables said facilities to be obtained without the need to move the telecamera or any of its parts.

In addition, said electronic circuit arrangement can be entirely housed within an internal extension unit with advantages for the manufacturer, seller and installer in terms of flexibility of use, considerable standardization and simple low-cost wiring of the video-intercom system.

Further characteristics and advantages of the invention will be more apparent from the description of a preferred but not exclusive embodiment of the video-intercom according to the invention, illustrated by way of non-limiting example on the accompanying schematic drawings, in which:

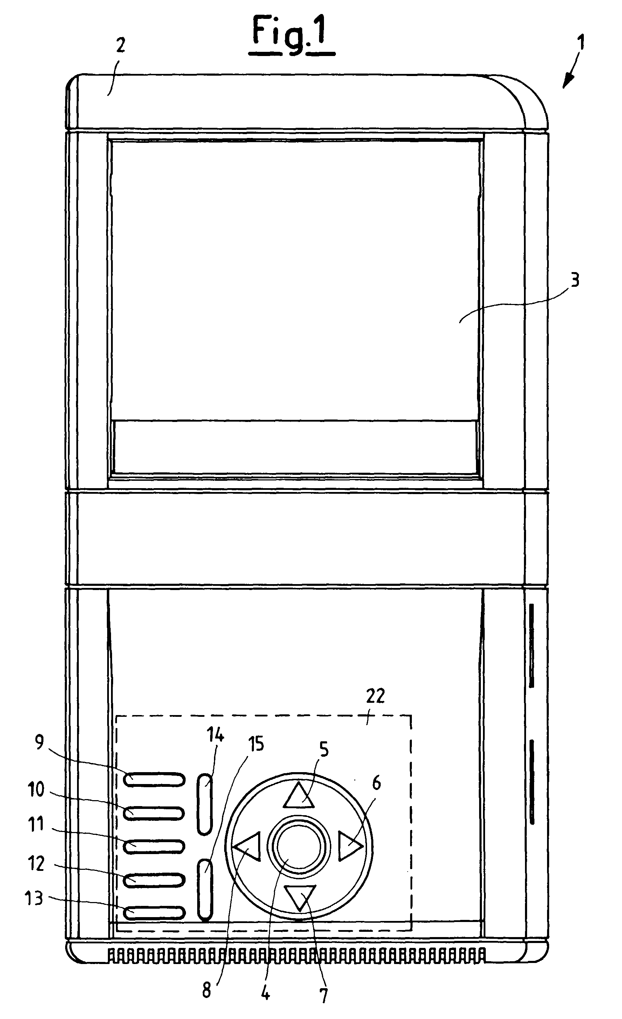

Figure 1 is a front view relative to that portion of an internal extension unit according to the invention dedicated to the display of a video signal, complete with the user interface necessary for performing the described functions and with a screen for displaying images (the figure does not show other parts of the internal extension unit which may be present, such as the intercom part, the service pushbuttons and the mechanical supports, however these are not relevant to the functions described in the present invention);

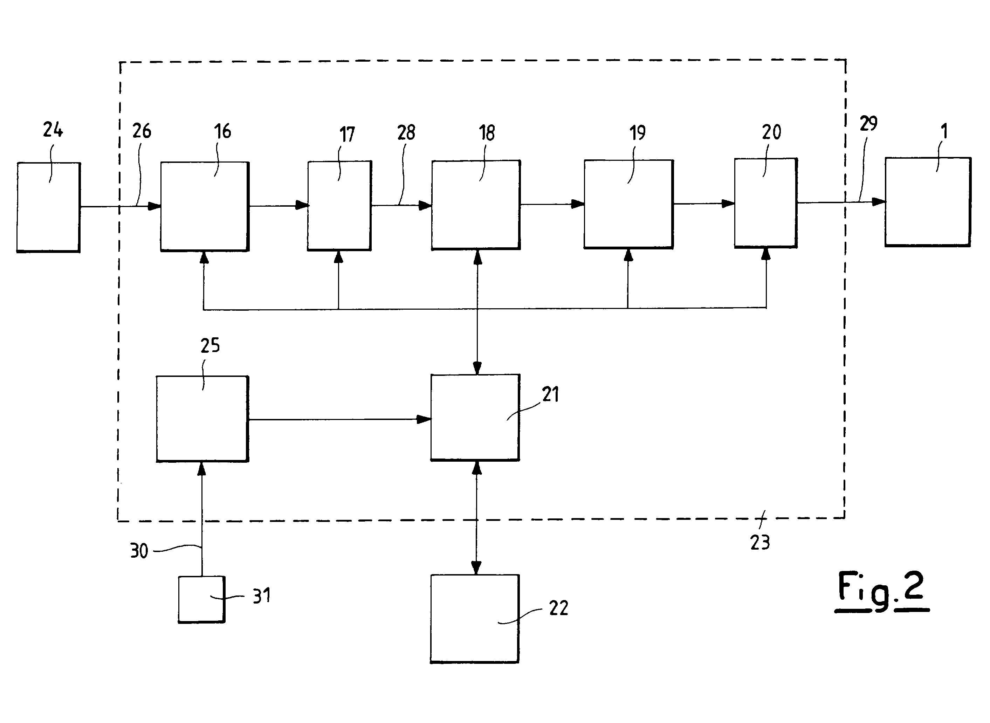

Figure 2 is a block scheme representing a non-limiting example of the electronic processing circuit for the video signal.

In Figure 1, the reference numeral 1 indicates the overall appearance of the internal extension unit, complete with a screen 3 for image display. The reference numeral 2 indicates the upper edge of the bevel located about the internal extension unit 1. In the lower part of Figure 1, the reference numeral 4 indicates the pushbutton for controlling the enlargement device, 5 the pushbutton for moving the image upwards, 6 the pushbutton for moving the image towards the right, 7 the image lowering pushbutton and 8 the pushbutton for moving the image towards the left.

In this manner, by operating the pushbuttons 5, 6, 7 and 8 the selected image portion can be displayed on the whole screen 3 by moving the image within the field of view in the horizontal, vertical and diagonal directions.

The enlargement function, performed by operating the pushbutton 4 (reduction can likewise be obtained by operating the same pushbutton) enables a portion of the image picked up by the telecamera 24 to be displayed on the whole screen 3.

With further reference to Figure 1, the reference numeral 9 indicates the pushbutton for automatically recording images on activating the telecamera 24, 10 indicates the pushbutton used for displaying the recorded images, 11 the pushbutton for activating the date and time, 12 the pushbutton for erasing and 13 the pushbutton for manually recording images.

There are two LED indicators indicated respectively by 14 and 15.

The LED 14, of green colour, indicates activation of the memorizing function, whereas the LED 15, of red colour, indicates the presence of recorded images in the memory.

The memorizing function (automatic or manual) enables one or more of the images picked up by the telecamera 24 to be stored, up to a maximum number beyond which the last recorded image becomes superimposed on the first by a progressive automatic erasing process. These images can then be recalled from the memory for their display. They can carry the date and time of their memorization together with further information (for example their progressive number) displayed on the screen 3.

The images recorded in the memory can be reproduced at will by the user by pressing the pushbutton 10. This activates the screen 3 for a predetermined time period (usually 30 or 60 seconds), during which the first image is presented. Each time the pushbutton 10 is pressed the next image is reproduced and the screen 3 is activated for a further predetermined time period (usually again for 30 or 60 seconds).

All the images present in the memory at any moment can be erased manually by the user by operating the appropriate pushbutton 12.

The entire field of view can be displayed by operating the pushbutton 4. The central region is bordered by a white rectangle. Pressing the pushbuttons 5, 6, 7, 8 causes the white rectangle to move in the corresponding direction, to hence enable a portion of the field of view to be selected. Further pressing the pushbutton 4 causes the selected portion to be displayed on the entire screen 3.

By again pressing the pushbutton 4 the image can either be further enlarged or be reduced to again display the entire field of view.

The enlarged image can also be moved by operating the pushbuttons 5, 6, 7, 8.

The date and time are set by the pushbutton 11. Pressing this pushbutton activates the screen 3, on which the current date and time appear. At this point the date, hour and minutes can be adjusted by pressing the pushbuttons 6, 8, 5 and 7 respectively.

Figure 2 represents a non-limiting example of the block diagram of the circuit by which the video signal is transferred from a telecamera 24 to an internal extension unit 1.

The reference numeral 16 indicates an input preamplifier for the video signal (represented by 26) fed by the telecamera 24. The reference numeral 17 represents a converter which converts the waveform of the input signal into a digital signal (represented by 28), 18 represents a memory for storing the digital video signal 28, 19 represents an electronic circuit for selecting the image portion to be enlarged, and 20 represents a converter for converting the digital video signal from the electronic circuit 19 into a video signal (represented by 29) to be fed to the internal extension unit 1.

The reference numeral 21 indicates the control unit for the image electronic scanning circuit arrangement (indicated overall by 23), and 22 indicates the dialogue interface between the electronic scanning circuit arrangement 23 and the user of the internal extension unit 1. The interface 22 externally comprises pushbuttons and LEDs (indicated by the numbers 4 to 15 in Figure 1) relative to the setting and adjustment of the functions of the video-intercom according to the present invention.

The reference numeral 25 indicates the functional block providing power to the functional blocks 16 and 21, and 30 indicates the electrical connection to an external electrical power source 31.

The block 25 incorporates a buffer battery (not shown) which maintains the images stored for a predetermined time period even if power from the external source 31 is absent.

The video signal 26 from the telecamera 24 is amplified by the preamplifier 16, then converted into a digital signal 28 by the converter 17, and its constituent images stored in the memory 18 in the form of bits. Usually a group of 6 bits corresponds to the logic information which each of the constituent elementary components (pixels) of the image has to contain. The memorized images displayable on the screen 3 comprise for example 128 pixels along the horizontal direction and 256 pixels along the vertical direction. The circuit 19 enables a portion of the displayed image to be selected and enlarged.

The converter 20 reconverts the digital video signal 28 into a video signal 29 displayable on the screen 3 of the internal extension unit 1.

In addition to enabling the images to be memorized either manually (by the pushbutton 13 during the operation of the telecamera 24) or automatically (by the pushbutton 9 to program the recording), the control unit 21 controls the overall operation of the circuit arrangement 23.

A further advantage of the present invention is the ability of the electronic circuit constructor to standardize production by installing the same electronic scanning circuit assembly 23, without any modification and/or adjustment, on any video-intercom.

In particular, the electronic scanning circuit arrangement 23 allows simple wiring within a limited space, all with a virtually absolute degree of standardization and flexibility for the manufacturer, seller and installer.

It is apparent that numerous modifications can be made by the expert of the art to the video-intercom of the present invention without leaving the scope of protection of the inventive idea, and that in the practical implementation of the invention the form of the illustrated details can be different and that these can be replaced by technically equivalent elements.

For example, for particular image memorizing and recording requirements, the capacity of the memory 18 can be extended to increase the image dimensions or image detail, or to store a greater number of images each time, each relative to the same call over the video-intercom.

Finally, image memorization and recording can be set remotely by a control system via cable or radio.

## Claims

1. A video-intercom comprising at least one telecamera (24) for images pickup, at least one internal extension unit (1) connected to said telecamera (24) and an electronic scanning circuit (23) for a digital processing of analogue video signals (26) produced by said telecamera (24) before feeding them to a screen (3) provided on said internal extension unit (1), said electronic scanning circuit (23) comprising means (19) for digital video signal (28) processing at least a portion of an image without provision of moving mechanical members on said telecamera (24), said images being memorised in a memory unit (18) connected to a device (16) for amplifying said analogue video signals (26) fed by said telecamera (24) and to an A/D converter device (17) for converting said analogue video signals (26) and a D/A converter device (20) for converting the stored signals, characterized in that said means (19) are adapted for simultaneously selecting, orientating and enlarging or reducing said portion in response to a request from a control unit (21), said memory unit (18) being associated with said control unit (21) which is driven by a user of said internal extension unit (1) through an interface (22) allowing dialogue with said electronic scanning circuit (23).

2. A video-intercom as claimed in claim 1, characterised in that said electronic scanning circuit (23) is housed in said internal extension unit (1) and/or in at least one constituent device of a video-intercom system.

3. A video-intercom as claimed in claim 1, characterised in that said electronic scanning circuit (23) further comprises means (25, 30) for supplying feed voltage to said amplifier device (16) and to said control unit (21), said means (25, 30) also comprising a buffer battery, which maintains said ima'ges in said memory unit (18) for a predetermined time period even if the electric power is absent.

4. A video-intercom as claimed in claim 1, characterised in that said interface (22) comprises control means (4-13) relative to setting and/or regulation of video-intercom functions and devices (14, 15) indicating a state of said functions.

5. A video-intercom as claimed in claim 4, characterised in that a certain degree of enlargement of said portion of images is adjustable by a user by means of at least one (4) of said control means (4-13) present on said interface (22).

6. A video-intercom as claimed in claim 4, characterised in that said portion of images is adjustable on said screen (3) by a user in a horizontal or vertical or diagonal direction, by operating a plurality (5-8) of said control means (4-13) present on said interface (22) and operable singly or in pairs.

7. A video-intercom as claimed in claim 4, characterised in that said memory unit (18) is programmable by a user in order to be automatically activated on activating said telecamera (24), by means of a plurality of said control means (4-13) present on said interface (22).

8. A video-intercom as claimed in claim 4, characterised in that said memory unit (18) memorises images, which are displayed on said screen (3), by means of at least one (10) of said control means (4-13) present on said interface (22).

9. A video-intercom as claimed in claim 1, characterised in that said electronic scanning circuit (23) further comprises means for associating with each image and for displaying on at least a portion of said screen (3) displaying said image, date, hour and minutes at which said image is memorised.

10. A video-intercom as claimed in claim 9, characterised in that said date, hour and minutes are adjustable on portions of said screen (3) by a user, by means of a plurality of said control means (4-13) present on said interface (22).

11. A video-intercom as claimed in claim 4, characterised in that a system for an automatic progressive image erasure is associated with said memory unit (18) to erase a first memorised image and replace it with a last memorised image after a predetermined number of stored images in said memory unit (18) has been reached.

12. A video-intercom as claimed in claim 11, characterised in that said images stored in said memory unit (18) are erasable by a user, by means of a plurality of said control means (4-13) present on said interface (22).

13. A video-intercom as claimed in claim 4, characterised in that said memory unit (18) is actionable by a user, by means of a plurality of said control means (4-13) present on said interface (22).

14. A video-intercom as claimed in claim 4, characterised in that said indicator devices (14, 15) comprise a first LED (14), indicating activation of said memory unit (18), and a second LED (15), indicating a presence of stored images in said memory unit (18).

## Patentansprüche

1. Video-Hausanlage mit mindestens einer Fernsehkamera (24) zum Aufnehmen von Bildern, mindestens einer mit der Fernsehkamera (24) verbundenen internen Zusatzeinheit (1) und einer elektronischen Abtastschaltung (23) zum digitalen Verarbeiten von durch die Fernsehkamea (24) erzeugten analogen Videosignalen (26), bevor sie einem auf der internen Zusatzeinheit (1) angeordneten Bildschirm (3) zugeführt werden;
wobei die elektronische Abtastschaltung (23) aufweist: eine Einrichtung (19) zum Verarbeiten digitaler Videosignale (28) mindestens eines Bildausschnitts, wobei auf der Fernsehkamera (24) kein bewegliches mechanisches Element vorgesehen ist;
wobei die Bilder in einer Speichereinheit (18) gespeichert werden, die mit einer Vorrichtung (16) zum Verstarken der durch die Fernsehkamera (24) zugeführten analogen Videosignale (26) und mit einem A/D-Wandler (17) zum Umwandeln der analogen Videosignale (26) und mit einem D/A-Wandler (20) zum Umwandeln der gespeicherten Signale verbunden ist;
dadurch gekennzeichnet, daß
die Einrichtung (19) dazu geeignet ist, den Bildausschnitt in Antwort auf eine Anforderung von einer Steuereinheit (21) gleichzeitig auszuwählen, auszurichten und zu vergrößern oder zu verkleinern,
wobei die Speichereinheit (18) der Steuereinheit (21) zugeordnet ist, die durch einen Benutzer der internen Zusatzeinheit (1) über eine Schnittstelle (22) gesteuert wird, über die ein Dialog mit der elektronischen Abtastschaltung (23) ermöglicht wird.

2. Video-Hausanlage nach Anspruch 1, dadurch gekennzeichnet, daß die elektronische Abtastschaltung (23) in der internen Zusatzeinheit (1) und/oder in mindestens einer Vorrichtung angeordnet ist, die eine Komponente des Video-Hausanlagensystems ist.

3. Video-Hausanlage nach Anspruch 1, dadurch gekennzeichnet, daß die elektronische Abtastschaltung (2) ferner Einrichtungen (25, 30) zum Zuführen einer Versorgungsspannung zur Verstärkervorrichtung (16) und zur Steuereinheit (21) aufweist, wobei die Einrichtungen (25, 30) außerdem eine Pufferbatterie aufweisen, die die Bilder auch dann für eine vorgegebene Zeitdauer in der Speichereinheit (18) hält, wenn die Stromversorgung unterbrochen ist.

4. Video-Hausanlage nach Anspruch 1, dadurch gekennzeichnet, daß die Schnittstelle (22) Steuereinrichtungen (4-13) zum Einstellen und/oder Regeln von Funktionen der Video-Hausanlage und Vorrichtungen (14, 15) zum Anzeigen des Zustands der Funktionen aufweist.

5. Video-Hausanlage nach Anspruch 4, dadurch gekennzeichnet, daß ein gewisser Vergrößerungsgrad des Bildausschnitts durch einen Benutzer mit Hilfe mindestens einer (4) der auf der Schnittstelle (22) bereitgestellten Steuereinrichtungen (4-13) einstellbar ist.

6. Video-Hausanlage nach Anspruch 4, dadurch gekennzeichnet, daß der Bildausschnitt durch einen Benutzer durch Betätigen mehrerer (5-8) der auf der Schnittstelle (22) bereitgestellten Steuereinrichtungen (4-13) einzeln oder paarweise in einer horizontalen oder vertikalen oder diagonalen Richtung auf dem Bildschirm (3) einstellbar ist.

7. Video-Hausanlage nach Anspruch 4, dadurch gekennzeichnet, daß die Speichereinheit (18) durch einen Benutzer mit Hilfe mehrerer der auf der Schnittstelle (22) bereitgestellten Steuereinrichtungen (4-13) programmierbar ist und durch Aktivieren der Fernsehkamera (24) automatisch aktiviert wird.

8. Video-Hausanlage nach Anspruch 4, dadurch gekennzeichnet, daß die Speichereinheit (18) mit Hilfe mindestens einer (10) der auf der Schnittstelle (22) bereitgestellten Steuereinrichtungen (4-13) Bilder speichert, die auf dem Bildschirm (3) dargestellt werden.

9. Video-Hausanlage nach Anspruch 1, dadurch gekennzeichnet, daß die elektronische Abtastschaltung (23) ferner eine Einrichtung aufweist, die jedem Bild zugeordnet werden kann und mindestens auf einem Teil des Bildschirms (3) das Bild und ein Datum und eine Uhrzeit in Stunden und Minuten darstellt, an dem bzw. zu der das Bild gespeichert wird.

10. Video-Hausanlage nach Anspruch 9, dadurch gekennzeichnet, daß das Datum und die Stunden und Minuten mit Hilfe mehrerer der auf der Schnittstelle (22) bereitgestellten Steuereinrichtungen (4-13) auf Teilen des Bildschirms (3) einstellbar sind.

11. Video-Hausanlage nach Anspruch 4, dadurch gekennzeichnet, daß der Speichereinheit (18) ein System für eine automatisch fortschreitende Bildlöschung zugeordnet ist, um ein erstes gespeichertes Bild zu löschen und durch ein letztes gespeichertes Bild zu ersetzen, nachdem eine vorgegebene Anzahl von Bildern in der Speichereinheit (18) gespeichert ist.

12. Video-Hausanlage nach Anspruch 11, dadurch gekennzeichnet, daß die in der Speichereinheit (18) gespeicherten Bilder mit Hilfe mehrerer der auf der Schnittstelle (22) bereitgestellten Steuereinrichtungen (4-13) durch einen Benutzer löschbar sind.

13. Video-Hausanlage nach Anspruch 4, dadurch gekennzeichnet, daß die Speichereinheit (18) mit Hilfe mehrerer der auf der Schnittstelle (22) bereitgestellten Steuereinrichtungen (4-13) durch einen Benutzer aktivierbar ist.

14. Video-Hausanlage nach Anspruch 4, dadurch gekennzeichnet, daß die Anzeigeeinrichtungen (14, 15) eine erste LED (14), die die Aktivierung der Speichereinheit (18) anzeigt, und eine zweite LED (15) aufweisen, die das Vorhandensein gespeicherter Bilder in der Speichereinheit (18) anzeigt.

## Revendications

1. Un interphone audiovisuel comprenant au moins une caméra de télévision (24) pour capter des images, au moins une unité d'extension interne (1) connectée à la caméra de télévision (24) et un circuit de balayage électronique (23) pour un traitement numérique de signaux vidéo analogiques (26) qui sont produits par la caméra de télévision (24), avant de les appliquer à un écran (3) incorporé sur l'unité d'extension interne (1), ce circuit de balayage électronique (23) comprenant des moyens (19) pour effectuer un traitement de signaux vidéo numériques (28) concernant au moins une partie d'une image, sans comporter d'organes mécaniques mobiles sur la caméra de télévision (24), ces images étant mémorisées dans une unité de mémoire (18) connectée à un dispositif (16) pour amplifier les signaux vidéo analogiques (26) qui sont fournis par la caméra de télévision (24) et à un dispositif convertisseur A/N (17) pour convertir les signaux vidéo analogiques (26), et à un dispositif convertisseur N/A (20) pour convertir les signaux enregistrés, caractérisé en ce que les moyens précités (19) sont adaptés pour simultanément sélectionner, orienter et agrandir ou réduire la partie précitée, en réponse à une demande provenant d'une unité de commande (21), cette unité de mémoire (18) étant associée à l'unité de commande (21) qui est commandée par un utilisateur de l'unité d'extension interne (1) par l'intermédiaire d'une interface (22) permettant un dialogue avec le circuit de balayage électronique (23).

2. Un interphone audiovisuel selon la revendication 1, caractérisé en ce que le circuit de balayage électronique (23) est logé dans l'unité d'extension interne (1) et/ou dans au moins un dispositif constitutif d'un système d'interphone audiovisuel.

3. Un interphone audiovisuel selon la revendication 1, caractérisé en ce que le circuit de balayage électronique (23) comprend en outre des moyens (25, 30) pour fournir une tension d'alimentation au dispositif amplificateur (16) et à l'unité de commande (21), les moyens précités (25, 30) comprenant également une batterie tampon qui maintient les images dans l'unité de mémoire (18) pendant une durée prédéterminée, même si l'énergie électrique est absente.

4. Un interphone audiovisuel selon la revendication 1, caractérisé en ce que l'interface (22) comprend des moyens de commande (4-13) concernant le réglage et/ou la commande de fonctions de l'interphone audiovisuel, et des dispositifs (14, 15) indiquant un état de ces fonctions.

5. Un interphone audiovisuel selon la revendication 4, caractérisé en ce qu'un certain degré d'agrandissement de la partie précitée d'images est réglable par un utilisateur au moyen de l'un au moins (4) des moyens de commande (4-13) se trouvant sur l'interface (22).

6. Un interphone audiovisuel selon la revendication 4, caractérisé en ce que la partie précitée d'images est réglable sur l'écran (3) par un utilisateur, dans une direction horizontale ou verticale ou diagonale, par la manipulation d'une multiplicité (5-8) des moyens de commande (4-13) présents sur l'interface (22) et pouvant être actionnés individuellement ou par paires.

7. Un interphone audiovisuel selon la revendication 4, caractérisé en ce que l'unité de mémoire (18) est programmable par un utilisateur pour être activée automatiquement au moment de l'activation de la caméra de télévision (24), au moyen d'une multiplicité des moyens de commande (4-13) présents sur l'interface (22).

8. Un interphone audiovisuel selon la revendication 4, caractérisé en ce que l'unité de mémoire (18) mémorise des images, qui sont visualisées sur l'écran (3), à l'aide de l'un au moins (10) des moyens de commande (4-13) se trouvant sur l'interface (22).

9. Un interphone audiovisuel selon la revendication 1, caractérisé en ce que le circuit de balayage électronique (23) comprend en outre des moyens pour associer à chaque image et pour visualiser sur au moins une partie de l'écran (3) visualisant l'image, la date, l'heure et les minutes auxquelles l'image est mémorisée.

10. Un interphone audiovisuel selon la revendication 9, caractérisé en ce qu'un utilisateur a la possibilité de placer la date, l'heure et les minutes sur des parties de l'écran (3), à l'aide d'une multiplicité des moyens de commande (4-13) présents sur l'interface (22).

11. Un interphone audiovisuel selon la revendication 4, caractérisé en ce qu'un système pour un effacement d'image progressif automatique est associé à l'unité de mémoire (18), pour effacer une image mémorisée et pour la remplacer par une image mémorisée en dernier, après qu'un nombre prédéterminé d'images enregistrées dans l'unité de mémoire (18) a été atteint.

12. Un interphone audiovisuel selon la revendication 11, caractérisé en ce que les images enregistrées dans l'unité de mémoire (18) peuvent être effacées par un utilisateur, à l'aide d'une multiplicité des moyens de commande (4-13) présents sur l'interface (22).

13. Un interphone audiovisuel selon la revendication 4, caractérisé en ce que l'unité de mémoire (18) peut être actionnée par un utilisateur, à l'aide d'une multiplicité des moyens de commande (4-13) présents sur l'interface (22).

14. Un interphone audiovisuel selon la revendication 4, caractérisé en ce que les dispositifs indicateurs (14, 15) comprennent une première diode électroluminescente (14), indiquant l'activation de l'unité de mémoire (18), et une seconde diode électroluminescente (15), indiquant une présence d'images enregistrées dans l'unité de mémoire (18).
